# EUROPEAN PATENT SPECIFICATION

(11) **EP 2 940 292 B1**
(45) Date of publication and mention of the grant of the patent: **07.03.2018**
(21) Application number: 14166670.1
(22) Date of filing: 30.04.2014
(51) Int. Cl.: F03D 1/06

(54) **Device for a rotor blade of a wind turbine**
Vorrichtung für ein Rotorblatt einer Windturbine
Dispositif pour pale de rotor d'une éolienne

(43) Date of publication of application: 04.11.2015
(73) Proprietor: Siemens Aktiengesellschaft, 80333 München (DE)
(72) Inventor: Gonzalez, Alejandro Gomez, 8000 Aarhus (DK); Laursen, Jesper Monrad, 8600 Silkeborg (DK)

(56) References cited:
- WO-A1-2013/060722
- WO-A2-2013/076313
- DE-A1-102011 122 140
- US-A1- 2011 229 321

## Description

The present invention relates to a device for decreasing the roughness sensitivity of a rotor blade of a wind turbine. Furthermore, the invention relates to a rotor blade of a wind turbine comprising such a device.

Wind turbines are typically subjected to harsh environmental conditions. This particularly applies to the rotor blades of wind turbines. Rotor blades of wind turbines installed onshore typically accumulate insects, dirt, and other particles. Furthermore, rotor blades of wind turbines installed offshore typically suffer from leading edge erosion due to the high content of salt in the ambient air.

A consequence of surface imperfections at the leading edge section of a rotor blade of a wind turbine is a loss of performance of the wind turbine.

One approach to tackle the issue of loss of performance due to surface imperfections at the leading edge section is the provision of vortex generators. Typically, these vortex generators are mounted on the suction side of the rotor blade. Different designs of vortex generators are disclosed e.g. in DE 10 2011 122 140 A1.

One technical effect of conventional vortex generators is the generation of vortices, by which the airflow in the boundary layer downstream of the vortex generator is re-energized. Thereby, the roughness sensitivity of the rotor blade is increased.

However, a drawback of conventional vortex generators for the purpose of improving roughness sensitivity is that they typically increase the lift coefficient of the rotor blade for high angles of attack. As a consequence, the maximum lift coefficient of the rotor blade is increased, which results in an increase of the maximum loading of the rotor blade.

An increase of the maximum loading of the rotor blade is typically undesirable as it involves a redesign of important components of the wind turbine, such as the rotor blade itself, the pitch bearing, the main bearing and the tower, and/or the decrease of the maximum wind speed at which the wind turbine is operable.

It is thus desired to provide means to decrease the roughness sensitivity of a rotor blade of a wind turbine without significantly increasing the maximum load of the rotor blade.

This objective is achieved by the independent claims. The dependent claims describe advantageous developments and modifications of the invention.

In accordance with the invention there is provided a device for decreasing the roughness sensitivity of a rotor blade of a wind turbine. The device comprises an attachment section by which it is arranged and prepared for being attached to a surface of the rotor blade. The device furthermore comprises a flow guiding plate and connection means, wherein the connection means connect the attachment section with the flow guiding plate. The flow guiding plate comprises an upstream section and a downstream section, whereby the upstream section and the downstream section are defined with regard to the direction of the airflow. Finally, the distance between the upstream section and the surface of the rotor blade is different compared to the distance between the downstream section and the surface of the rotor blade.

The device is suited to generate a vortex downstream of the device. In particular, the device is suited to generate a pair of rotating vortices.

As an example, a pair of counter rotating or co-rotating vortices can be generated. However, other types of generated vortices are possible, too. It may thus also be possible that the device generates a plurality of vortices downstream of the device wherein the generated vortices comprise an irregu lar direction of rotation. In other words, an irregularly shaped turbulence downstream of the device is also possible.

In another embodiment, the device has the shape of a channel, for instance an open or a closed channel.

A closed channel is suited to compress the airflow flowing along the surface of the rotor blade such that the airflow is energized downstream of the device and thus the roughness sensitivity of the rotor blade is decreased.

In general, the lift coefficient of an airfoil section with a rough leading edge is lower than the lift coefficient of the same airfoil section with a clean leading edge without imperfections. In normal applications, this difference in lift coefficient between normal and rough conditions increases as the angle of attack increases.

The roughness sensitivity of the rotor blade is reduced by the described device because the difference of the lift coefficient of the airfoil section between normal and rough operational conditions is reduced due to the vortices generated downstream of the device and/or due to the compression of the airflow by means of the closed channel. Therefore, in the cases where the rotor blade operates with either a dirty leading edge, or an eroded leading edge, the loss of performance will be lower.

Advantageously, the device energizes the airflow of the boundary layer, which is in close proximity to the surface of the rotor blade.

The boundary layer of the airflow flowing along the surface of the rotor blade is defined as the layer of the airflow in the immediate vicinity of the bounding surface of the rotor blade where the effects of viscosity are significant. The thickness of the boundary layer is to be understood as the distance from the surface of the rotor blade until a point where the viscous flow velocity of the airflow is 99 per cent of the free-stream velocity. The free-stream velocity may be understood as the velocity of an unhindered, inviscid airflow.

The thickness of the boundary layer in the case of a typical rotor blade of a wind turbine is in the range of a few millimeters and may reach a magnitude until a few centimeters. The thickness of the boundary layer is dependent on the angle of attack.

As an example, the boundary layer thickness at a given position on the airfoil may be 1 millimeter for an angle of attack of 5 degrees and may be 3 millimeters for an angle of attack of 13 degrees. Note that concrete values of the thickness of the boundary layer heavily depend on the specific design of the rotor blade.

The attachment section of the device is the section or part of the device by which it is destined to be attached to the surface of the rotor blade.

Advantageously, the attachment section has the shape of a plate.

This has, firstly, the advantage of an ease of manufacturing of the device.

Secondly, it has the advantage that it fits well to the surface of the rotor blade as the surface of the rotor blade typically also comprises the shape of a plane, at least with regard to small relative dimensions as it is the case with the device.

However, it is noted that the attachment section of the device may also only consist of a contact face of a vertical wall, the latter being, for instance, a part of the connection means of the device.

An upstream section and a downstream section can be assigned to the flow guiding plate. The upstream section is defined by the side of the flow guiding plate which is directed towards the source of the airflow flowing across the device. Likewise, the downstream section of the flow guiding plate is defined as being the side of the flow guiding plate which is directed towards the downstream side of the airflow.

More specifically, in the case that the device is mounted to the suction side of a rotor blade and the airflow flows from the leading edge of the rotor blade to the trailing edge of the rotor blade, then the upstream section is directed towards the leading edge of the rotor blade and the downstream section is directed towards the trailing edge of the rotor blade.

An important aspect of the described device is that the flow guiding plate is inclined with regard to the surface of the rotor blade where it is mounted on or where it is arranged and prepared for being attached.

In other words, the device can be described as being tapered with regard to the distance between the surface of the rotor blade and the flow guiding plate.

Generally speaking, it can be stated that the distance between the upstream section and the surface of the rotor blade is different compared to the distance between the downstream section and the surface of the rotor blade.

A technical effect of the device is that it is sensitive with regard to the thickness of the boundary layer.

If, for example, in a first operational state of the wind turbine the boundary layer is only slightly thicker than the distance between the upstream section of the flow guiding plate and the surface of the rotor blade, then a relatively high velocity of the airflow is flowing across the device. Thus, the device has a significant impact on the airflow and effectively re-energizes the boundary of the rotor blade. As a consequence, the robustness of the rotor blade increases significantly compared to a rotor blade without such a device.

A rotor blade is referred to as robust in the context of this patent application if, due to imperfections or soiling of the rotor blade upstream of the device,
- low scale separation of the airflow is avoided or at least decreased,
- a decrease of the lift coefficient is avoided or at least reduced, and/or
- additional noise emission is avoided or at least reduced.

If, in a second operational state of the wind turbine, the thickness of the boundary layer doubles, then only a relatively small fraction of the airflow and only a small velocity of the airflow is passing along the device.

Thus, the device is relatively ineffective, i.e. insensitive, if the boundary is thick. In other words, the impact of the device with regard to the airflow is small. Consequently, the change in the lift coefficient is small compared to a scenario without device and the increase of the loading is small, too.

This is advantageous in regard to the fact that at high angles of attack and at thick boundary layers an increase of the lift coefficient resulting in an increase of the load of the wind turbine is generally not desired.

This behavior or effect of the device as disclosed is particularly advantageous for a rough leading edge section. A rough leading edge section of a rotor blade of a wind turbine may, for instance, occur due to harsh environmental conditions. Rotor blades of wind turbines, that are installed onshore, typically accumulate insects, dirt and other particles. Rotor blades of wind turbines, that are installed offshore, typically suffer from leading edge erosion due to the high content of salt in the ambient air.

Note that a rough leading edge section may also originate due to imperfections during manufacturing.

In an advantageous embodiment, a plane comprising the upstream section of the flow guiding plate and the downstream section of the flow guiding plate comprises an angle which is greater than 5 degrees, in particular greater than 10 degrees, with the surface of the rotor blade.

According to the invention, the angle is between 10 degrees and 15 degrees.

As is has been described and mentioned already, a certain inclination of the flow guiding plate with regard to the surface of the rotor blade is necessary and beneficial for re-energizing the airflow of the boundary layer downstream of the device.

In principle, the flow guiding plate can be inclined either towards the upstream section or towards the downstream section of the device.

However, according to the invention, the flow guiding plate is inclined towards the downstream section.

In other words, the distance between the upstream section and the surface of the rotor blade is larger than the distance between the downstream section and the surface of the rotor blade.

In another advantageous embodiment, the flow guiding plate has the shape of a plane plate. In particular, the flow guiding plate has the shape of a plane trapezoidal plate.

In another advantageous embodiment, the flow guiding plate is bent such that the airflow is accelerated along its passage along the device in such a manner that a pre-determined distribution of the speed of the airflow across the boundary layer is achieved at the downstream section of the flow guiding plate.

Note that if the flow guiding plate comprises the shape of a plane plate, which is for example beneficial with regard to manufacturing of the device, then the angle is determined by the angle between the flow guiding plate and the surface of the rotor blade.

If, however, the flow guiding plate is bent, which is for instance beneficial in such that a customized or pre-determined distribution of the speed of the airflow at the downstream section of the flow guiding plate can be achieved, then the angle should not be determined at the flow guiding plate as such but by a virtual plane comprising the upstream section of the flow guiding plate and the downstream section of the flow guiding plate.

In other words, by a customized design of the flow guiding plate the profile or distribution of the speed of the airflow can be designed specifically to the needs and the application of the device. As a consequence, the efficiency of the device and the selectiveness of the device according to the loading of the wind turbine can further be improved. However, it has to be found a balance between ease of manufacturing and maximal efficiency of the device.

In a particular embodiment of the invention, the flow guiding plate comprises a first sub-plate and a second sub-plate, wherein both sub-plates are separated by a gap.

In other words, the device comprises a type of two-part roof comprising a slot, i.e. an open space, in between. The gap between the first sub-plate and the second sub-plate is beneficial for generating the vortices, e.g. for generating a pair of counter rotating vortices, downstream of the device.

In particular, the attachment section may have a rectangular shape as being viewed in a top view. Advantageously, the connection means are substantially parallel to each other.

Then, in contrast to conventional vortex generators which typically have side walls that are tapered as being viewed in a top view, the device as described in this patent application does not necessarily need to have tapered side walls, but may also have side walls that are parallel to each other.

In another advantageous embodiment, the gap has a substantially trapezoidal shape in a top view of the device. The trapezoidal shape comprises a first base, a second base and two legs. The first base is adjacent to the upstream section of the flow guiding plate and the second base is adjacent to the downstream section of the flow guiding plate. The first base is larger than the second base.

It is advantageous to design the gap between the first sub-plate and the second sub-plate such that it comprises the shape of a trapezoid. This trapezoidal shape refers to a top view as being viewed if the device is mounted on the surface of the rotor blade and is viewed from the top.

Any trapezoidal shape comprises two bases and two legs, wherein the two bases are parallel to each other and the two legs may be inclined with regard to each other. As the first base is larger than the second base, the opening of the gap is larger at the upstream section compared to the opening of the gap at the downstream section.

In another particular embodiment of the invention, the connection means comprises a first side wall and a second side wall. Furthermore, the flow guiding plate and both side walls build a closed channel such that the airflow is accelerated along its passage along the closed channel.

A technical effect of a device comprising such a closed channel is that the airflow may be manipulated, in particular compressed, such that the airflow of the boundary layer downstream of the device is re-energized. Due to the selectiveness of the device, the robustness of the rotor blade is increased without significantly increasing the maximum lift coefficient, thus without significantly increasing the maximum load of the rotor blade.

The invention is also directed towards a rotor blade of a wind turbine comprising a trailing edge, a leading edge, a suction side, a pressure side, and at least one device as described above.

Particularly, it is beneficial to attach the device at the suction side of the rotor blade.

This is advantageous because it is particularly efficient to manipulate the airflow flowing from the leading edge to the trailing edge along the suction side of the rotor blade.

In another advantageous embodiment, the rotor blade comprises at least one further device, wherein the further device comprises the features of the described device. At least a part of the flow guiding plate of the device is directly connected to at least a part of the flow guiding plate of the further device, thus providing a continuous set of devices.

It is thus beneficial to place devices one after the other along a pre-determined section along the span of the rotor blade.

In a first alternative, the entire length of the rotor blade from the tip section to the shoulder or even until the root section is covered by devices.

In another alternative, only certain sections in span-wise direction of the rotor blade are covered by devices. These devices may be spaced between each other. However, it is advantageous to place them directly adjacent to each other, at least in a certain section of the rotor blade.

In another advantageous embodiment the attachment section of the device is integrated in the surface of the rotor blade.

This means that the device is placed on the surface of the rotor blade directly via the connection means. This may be advantageous if an attachment section attached to the surface of the rotor blade would disturb the airflow or would disturb aerodynamic properties of the rotor blade.

In another advantageous embodiment, the maximum distance between the flow guiding plate and the surface of the rotor blade is smaller than the thickness of the boundary layer.

In other words, the device is fully submerged within the boundary layer. As it has already been mentioned, the thickness of the boundary layer varies according to the angle of attack. Thus, the statement that in an advantageous embodiment the device shall be entirely submerged within the boundary layer refers to a boundary layer under normal operation conditions of the wind turbine. The thickness of the boundary layer may exemplarily be in the range of a few millimeters up to a few centimeters at a given position of the rotor blade.

In another advantageous embodiment, the distance between the flow guiding plate and the surface of the rotor blade is chosen such that for increasing angles of attack the fraction of the airflow flowing within the boundary layer at the position of the device and which is deflected by the device decreases, compared to the total airflow within the boundary layer at the position of the device, thus leading to a decreasing load of the wind turbine.

In other words, the distance between the flow guiding plate and the surface of the rotor blade is chosen such that the selective effectiveness of the device contributes to a decrease of the load of the wind turbine at high angles of attack, thus at extreme loading of the wind turbine.

Embodiments of the invention are now described, by way of example only, with reference to the accompanying drawings, of which:
- Figure 1: shows a wind turbine;
- Figure 2: shows a perspective view of a first embodiment of a device according to the invention;
- Figure 3: shows a side view of a conventional vortex generator;
- Figure 4: shows a side view of a flow guiding plate of another embodiment of the device;
- Figure 5: shows a side view of the first embodiment of the device;
- Figure 6: shows a perspective view of a second embodiment of a device according to the invention;
- Figure 7: shows a perspective view of a third embodiment of a device according to the invention;
- Figure 8: shows a top view of the third embodiment of the device;
- Figure 9: shows a perspective view of a part of a rotor blade with a fourth embodiment of a device according to the invention;
- Figure 10: shows a side view of the second embodiment of the device;
- Figure 11: shows a perspective view of a part of a rotor blade with a continuous set of devices, and
- Figure 12: shows curves of the lift coefficient of a rotor blade with regard to the angle of attack of the rotor blade.

The illustration in the drawings is in schematic form. It is noted that in different figures, similar or identical elements may be provided with the same reference signs.

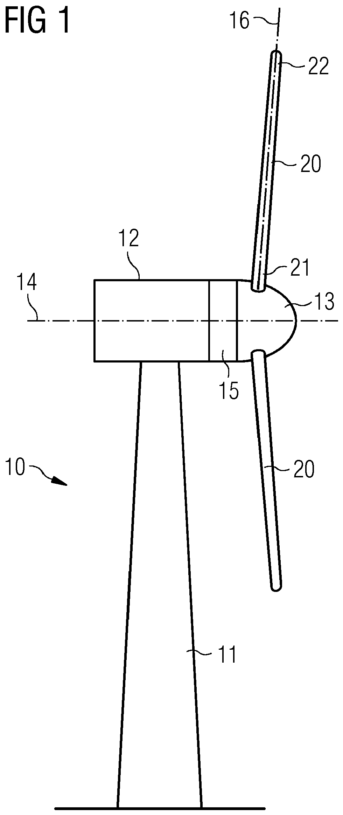

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with one or more rotor blades 20. Preferably, the wind turbine 10 comprises three rotor blades 20. The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. If the hub 13 is connected directly to the rotor, the wind turbine is referred to as a gearless, direct drive wind turbine. Alternatively, the hub 13 may also be connected to the rotor via a gearbox. This type of wind turbine is commonly referred to as a geared wind turbine.

The generator 15 is accommodated within the nacelle 12. It comprises the rotor and a stator. The generator 15 is arranged and prepared for converting the rotational energy from the rotor into electrical energy.

In the concrete example of Figure 1, the wind turbine 10 comprises three rotor blades 20 (of which two rotor blades 20 are depicted in Figure 1). The rotor blades 20 are mounted rotatable with regard to the hub 13 by means of a pitch bearing. The rotor blades 20 may thus be pitched in order to optimize their orientation with regard to the wind flow impinging on the wind turbine 10. Pitching may be performed about a pitch axis 16.

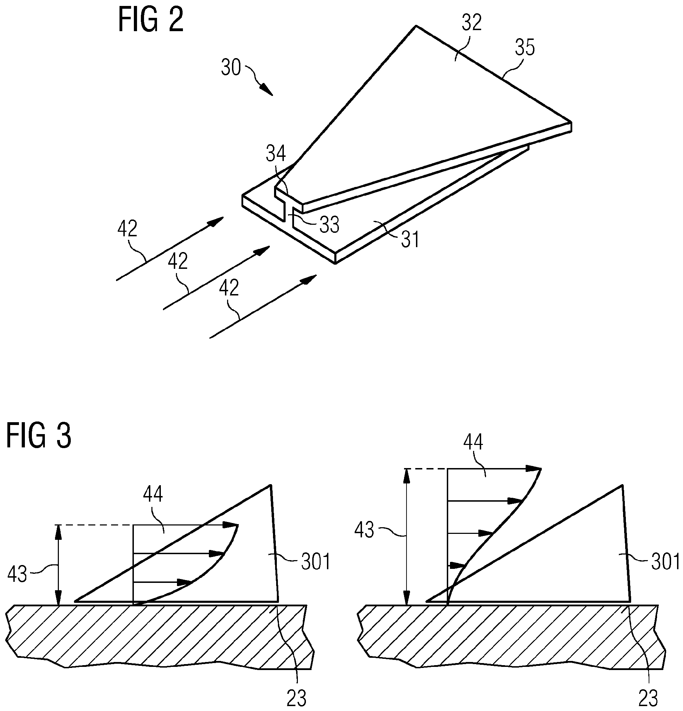

Figure 2 shows a first embodiment of a device 30. The device 30 comprises a base plate which serves for attaching the device 30 to a surface of a rotor blade of a wind turbine. Thus, the base plate is also referred to as the attachment section 31.

Furthermore, the device 30 comprises connection means 33 in the center of the device 30. The attachment section 31 comprises the shape of a rectangle in a top view. The connection means 33 connect the attachment section 31 with the flow guiding plate 32.

The flow guiding plate 32 comprises an upstream section 34 with regard to an airflow 42 flowing across the device 30, and a downstream section 35 with regard to an airflow 42 flowing across the device 30. The flow guiding plate 32 has a trapezoidal shape.

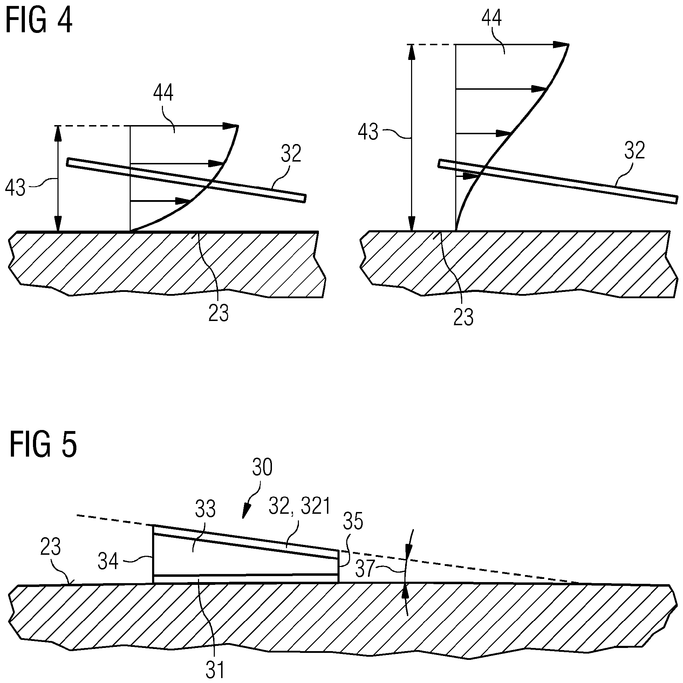

Figure 3 shows a conventional vortex generator 301 which comprises the shape of a triangle, as regarded from the side view. At the left of Figure 5, the triangular shaped conventional vortex generator 301 exceeds the thickness of the boundary layer 43. A profile of the velocities of the airflow 44 can be seen. At the right of Figure 3 the same conventional vortex generator 301 in another boundary layer with a thickness 43 which is approximately the double of the scenario at the left can be seen. Although the velocity profile 44 is different and the fraction of the conventional vortex generator 301 which is submerged within the boundary layer is different, the effectiveness or the impact of the conventional vortex generator 301 on the airflow is similar.

In Figure 4, the flow guiding plate 32 of a device according to one embodiment of the invention can be seen. For a thin boundary layer - at the left - as well as for a thick boundary layer - at the right - the effective velocity of the airflow around the device decreases quicker with thick boundary layers. This has the effect that the efficiency of the device decreases for a thick boundary layer.

Figure 5 shows a side view of the device 30 as shown in Figure 2, mounted on a surface 23 of a rotor blade. The device 30 is attached to the surface 23 of the rotor blade at or via the attachment section 31. The flow guiding plate 32 comprises the shape of a plane plate. Thus, an angle 37 between the flow guiding plate 32 and the surface of the rotor blade 23 can be determined. The angle 37 in Figure 5 is 25 degrees.

Note that in the case that the flow guiding plate is bent, i.e. curved, the angle 37 is not defined by the flow guiding plate itself but by a virtual plane comprising the upstream section 34 and the downstream section 35 of the flow guiding plate 32.

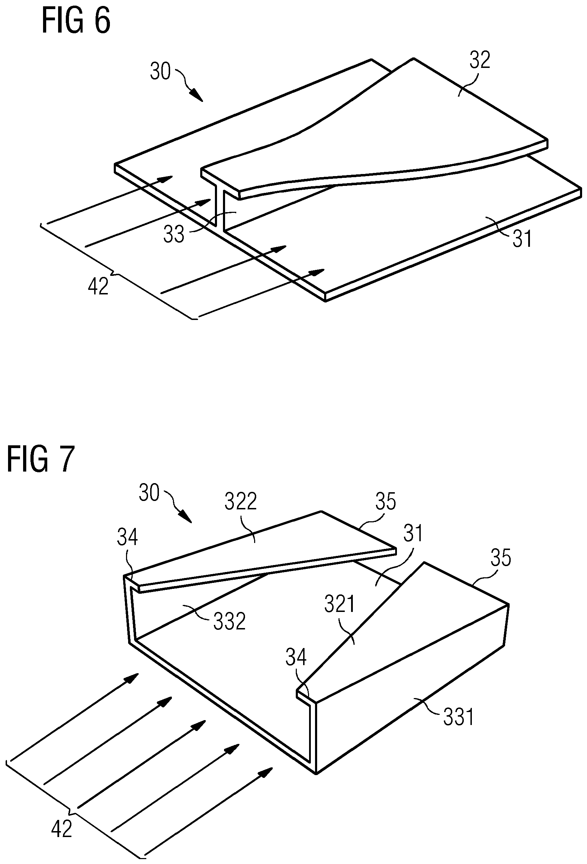

Figure 6 shows a second embodiment of a device 30. The second embodiment is similar to the first embodiment as shown in Figure 2, except for the shape of the flow guiding plate 32. While the flow guiding plate of the first embodiment as shown in Figure 2 is a plane plate, the flow guiding plate 32 of the second embodiment as shown in Figure 6 has a curved, i.e. a bent shape. This has the advantage of a customized design of the airflow at the downstream section of the device.

Figure 7 shows a third embodiment of a device 30. It can be seen that the flow guiding plate comprises a first sub-plate 321 and a second sub-plate 322. The two sub-plates 321, 322 are of a similar shape. In the particular embodiment of Figure 7, the device 30 is even symmetrical about an axis of symmetry splitting the attachment section 31 into two equal halves along the direction of the airflow 42. By means of the flow guiding plate, in particular by means of the gap between the first sub-plate 321 and the second sub-plate 322 and by means of the fact that the sub-plates 321, 322 are inclined along the direction of the airflow 42, this results in a pair of counter rotating vortices 41 at the downstream section 35 of the device 30. The downstream section 35 is referred to as the part of the device 30 which is closest to the downstream end. Likewise, an upstream section 34 is defined as being closest to the upstream part of the airflow 42.

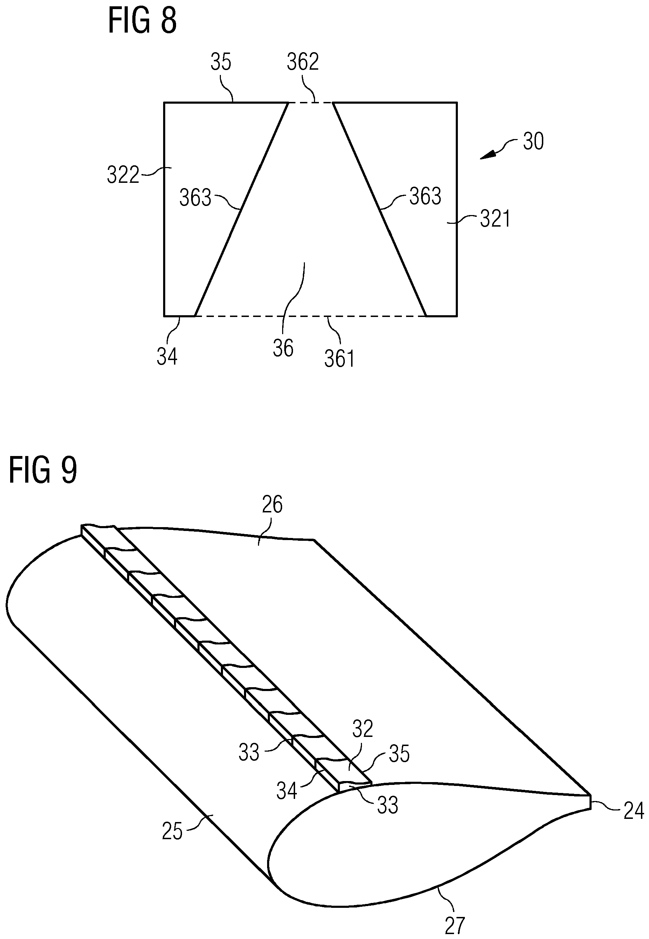

Figure 8 shows a top view of the third embodiment of the device as shown in Figure 7. Again, the first sub-plate 321 and the second sub-plate 322 can be seen. It can also be discerned the trapezoidal shape of the gap 36 between the first sub-plate 321 and the second sub-plate 322. The gap 36 is delimited by the two legs 363. Furthermore, it is limiting to the upstream section 34 by the first base 361 and to the downstream section 35 by the second base 362. The gap 36 is tapered towards the downstream section 35.

Figure 9 shows a fourth embodiment of a device 30, as mounted on a suction side 26 of a rotor blade. The rotor blade furthermore comprises a leading edge 25 and a flat-back trailing edge 24.

In Figure 9, a plurality of devices 30 are mounted one next to the other. Each device 30 comprises a flow guiding plate 32 and connection means 33 for connecting the flow guiding plate 32 to the suction side 26 of the rotor blade. The connection means are designed as side walls. Thus, a closed channel is built.

Note that the flow guiding plate 32 is inclined from an upstream section 34 of the device 30 to a downstream section 35. Due to this inclination, an effective manipulation of the airflow flowing across the device 30 is caused.

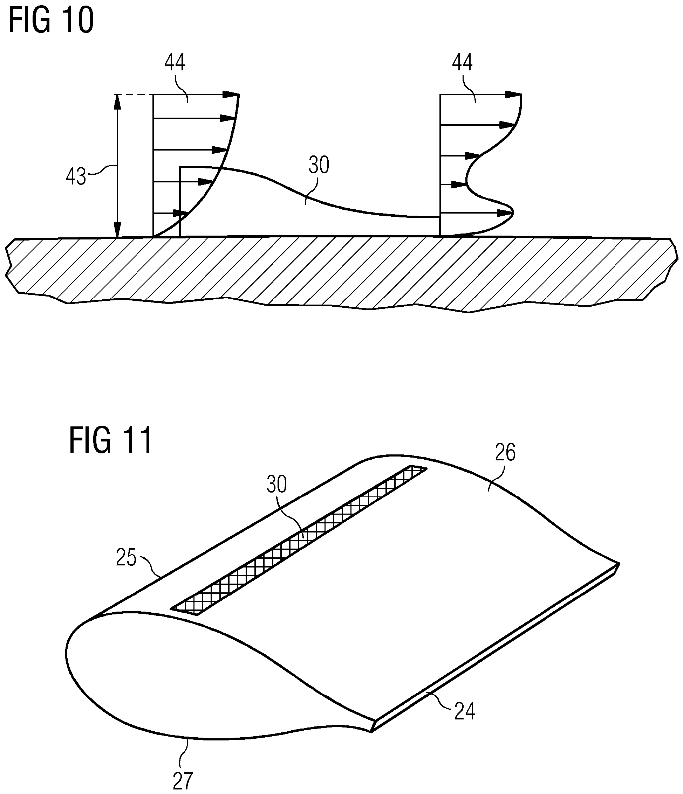

Figure 10 shows a device 30 with a bent or curved flow guiding plate. This has the advantage that the velocity profile 44 of the airflow can be designed specifically in a pre-determined way leading to a velocity profile 44 at the downstream section of the device 30 which has a pre-determined distribution of velocities. This is able to further increase the selectiveness and efficiency of the device.

Figure 11 shows a perspective view of a part of a rotor blade, the rotor blade comprising a leading edge 25, a trailing edge 24, a suction side 26 and a pressure side 27. Devices 30 aligned along a row or along a script are mounted on the suction side 26 in a first third of the chord length of the rotor blade, as measured from the leading edge 25.

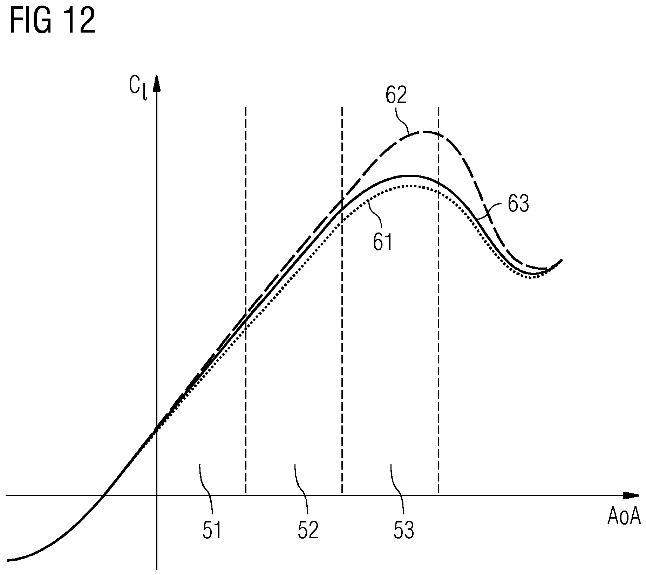

Figure 12 shows the dependency of the lift coefficient C₁ with regard to the angle of attack AoA for various rotor blades.

The first curve 61 shows the lift coefficient C₁ for a conventional rotor blade with a rough leading edge without any devices such as vortex generators or the like. It can be seen that the lift coefficient C₁ increases in a first section 51 of angles of attack AoA and increases in a second section 52 of angles of attack AoA. In a third section 53 of angles of attack AoA, the lift coefficient C₁ reaches a maximum value. Typically, the maximum lift coefficient C₁ coincides with a maximum loading for the rotor blade.

The second curve 62 shows the lift coefficient C₁ for a rotor blade with conventional vortex generators mounted on a surface of the rotor blade with a rough leading edge. It can be seen that in the first section 51 of angles of attack AoA, the lift coefficient C₁ is quite similar to the first curve 61, representing the conventional rotor blade without any devices such as vortex generators.

In the second section 52 of angles of attack AoA, the lift coefficient C₁ is slightly increased compared to the first curve 61. This is generally advantageous as it may involve a higher efficiency of the rotor blade and/or an increased robustness of the rotor blade.

In the third section 53 of angles of attack AoA, the lift coefficient C₁ is significantly increased compared to the first curve 61. This is generally disadvantageous as it may increase the maximum load of the rotor blade, thus involving re-design of important components of the wind turbine and/or limitation of wind speeds where the wind turbine is operable.

The third curve 63 shows the lift coefficient C₁ for a rotor blade with a device according to this invention mounted on a surface of the rotor blade. It can be seen that in the first section 51 of angles of attack AoA, the lift coefficient C₁ is quite similar to the first curve 61. In the second section 52, the lift coefficient C₁ is quite similar to the second curve 62, thus enjoying the advantages of a slightly increased lift coefficient C₁ as described above.

In the third section 53 of angles of attack AoA, the lift coefficient C₁ is significantly reduced compared to the second curve 62, which represents a rotor blade with conventional vortex generators.

In summary, with regard to the lift coefficient C₁, the rotor blade with a device according to the invention enjoys the advantageous lift-enhancement effect in the second section 52 of angles of attack AoA, without suffering from a disadvantageous increase of the maximum lift coefficient C₁ in the third section 53 of angles of attack AoA.

## Claims

1. Rotor blade (20) of a wind turbine (10) comprising a trailing edge (24), a leading edge (25), a suction side (26), a pressure side (27), and at least one device (30) for decreasing the roughness sensitivity of the rotor blade (20), wherein
- the device (30) comprises an attachment section (31) by which it is arranged and prepared for being attached to a surface (23) of the rotor blade (20),
- the device (30) comprises a flow guiding plate (32) and connection means (33) which connect the attachment section (31) with the flow guiding plate (32),
- the device (30) is suited to generate a vortex downstream of the device (30),
- the flow guiding plate (32) comprises an upstream section (34) and a downstream section (35), whereby the upstream section (34) and the downstream section (35) are defined with regard to the direction of the airflow (42), - the distance between the upstream section (34) and the surface (23) of the rotor blade (20) is different compared to the distance between the downstream section (35) and the surface (23) of the rotor blade (23), and
- the distance between the upstream section (34) and the surface (23) of the rotor blade (20) is larger than the distance between the downstream section (35) and the surface (23) of the rotor blade (20)
**characterized in that**
a plane comprising the upstream section (34) of the flow guiding plate (32) and the downstream section (35) of the flow guiding plate (32) comprises an angle (37) with the surface (23) of the rotor blade (20) which is between 10 degrees and 15 degrees.

2. Device (30) according to claim 2,
wherein the flow guiding plate (32) has the shape of a plane plate, in particular of a plane trapezoidal plate.

3. Device (30) according to claim 1,
wherein the flow guiding plate (32) is bent such that the airflow (42) is accelerated along its passage along the device (30) in such a manner that a pre-determined distribution of the speed of the airflow (42) across the boundary layer is achieved at the downstream section (35) of the flow guiding plate (32).

4. Device (30) according to one of the preceding claims, wherein the flow guiding plate (32) comprises a first sub-plate (321) and a second sub-plate (322), both sub-plates (321, 322) being separated by a gap (36).

5. Device (30) according to claim 4,
wherein
- the gap (36) has a substantially trapezoidal shape in a top view of the device (30),
- the trapezoidal shape comprises a first base (361), a second base (362) and two legs (363),
- the first base (361) is adjacent to the upstream section (34) of the flow guiding plate (32) and the second base (362) is adjacent to the downstream section (35) of the flow guiding plate (32), and
- the first base (361) is larger than the second base (362).

6. Device (30) according to one of the claims 1 to 3,
wherein
- the connection means (33) comprises a first side wall (331) and a second side wall (332), and
- the flow guiding plate (32) and both side walls (331, 332) build a closed channel such that the airflow (42) is accelerated along its passage along the closed channel.

7. Rotor blade (20) according to one of the preceding claims,
wherein the device (30) is attached to the suction side (26) of the rotor blade (20).

8. Rotor blade (20) according to one of the preceding claims,
wherein the attachment section (31) of the device (30) is integrated in the surface (23) of the rotor blade (20).

9. Rotor blade (20) according to one of the preceding claims,
wherein the maximum distance between the flow guiding plate (32) and the surface (23) of the rotor blade (20) is smaller than the thickness of the boundary layer (43).

10. Rotor blade (20) according to one of the preceding claims,
wherein the distance between the flow guiding plate (32) and the surface (23) of the rotor blade (20) is chosen such that for increasing angles of attack the fraction of the airflow (42) flowing within the boundary layer at the position of the device (30) and which is influenced by the device (30) decreases, compared to the total airflow (42) within the boundary layer at the position of the device (30), thus leading to a decreasing load of the wind turbine (10).

## Patentansprüche

1. Rotorblatt (20) einer Windenergieanlage (10) mit einer Hinterkante (24), einer Vorderkante (25), einer Saugseite (26), einer Druckseite (27) und mindestens einer Vorrichtung (30) zum Verringern der Rauhigkeitsempfindlichkeit des Rotorblatts (20),
wobei
- die Vorrichtung (30) einen Befestigungsabschnitt (31) umfasst, mit dem sie für das Anbringen an einer Oberfläche (23) des Rotorblatts (20) angeordnet und ausgelegt ist,
- die Vorrichtung (30) eine Strömungsleitplatte (32) und Verbindungsmittel (33) umfasst, welche den Befestigungsabschnitt (31) mit der Strömungsleitplatte (32) verbinden,
- sich die Vorrichtung (30) zum Erzeugen eines Wirbels stromabwärts von der Vorrichtung (30) eignet,
- die Strömungsleitplatte (32) einen stromaufwärtigen Abschnitt (34) und einen stromabwärtigen Abschnitt (35) umfasst, wobei der stromaufwärtige Abschnitt (34) und der stromabwärtige Abschnitt (35) in Bezug auf die Richtung der Luftströmung (42) definiert sind,
- sich der Abstand zwischen dem stromaufwärtigen Abschnitt (34) und der Oberfläche (23) des Rotorblatts (20) von dem Abstand zwischen dem stromabwärtigen Abschnitt (35) und der Oberfläche (23) des Rotorblatts (20) unterscheidet und
- der Abstand zwischen dem stromaufwärtigen Abschnitt (34) und der Oberfläche (23) des Rotorblatts (20) größer ist als der Abstand zwischen dem stromabwärtigen Abschnitt (35) und der Oberfläche (23) des Rotorblatts (20),
**dadurch gekennzeichnet, dass**
eine Ebene, die den stromaufwärtigen Abschnitt (34) der Strömungsleitplatte (32) und den stromabwärtigen Abschnitt (35) der Strömungsleitplatte (32) umfasst, einen Winkel (37) zu der Oberfläche (23) des Rotorblatts (20) umfasst, der zwischen 10 und 15 Grad beträgt.

2. Vorrichtung (30) nach Anspruch 2,
wobei die Strömungsleitplatte (32) die Form einer ebenen Platte, insbesondere einer ebenen, trapezförmigen Platte aufweist.

3. Vorrichtung (30) nach Anspruch 1,
wobei die Strömungsleitplatte (32) so gebogen ist, dass die Luftströmung (42) beim Entlangströmen an der Vorrichtung (30) auf eine solche Weise beschleunigt wird, dass eine vorgegebene Geschwindigkeitsverteilung für die Luftströmung (42) über die Grenzschicht hinweg an dem stromabwärtigen Abschnitt (35) der Strömungsleitplatte (32) erreicht wird.

4. Vorrichtung (30) nach einem der vorhergehenden Ansprüche, wobei die Strömungsleitplatte (32) eine erste Teilplatte (321) und eine zweite Teilplatte (322) umfasst, die beide (321, 322) durch einen Spalt (36) getrennt sind.

5. Vorrichtung (30) nach Anspruch 4,
wobei
- der Spalt (36) in einer Draufsicht auf die Vorrichtung (30) im Wesentlichen trapezförmig ist,
- die Trapezform eine erste Grundseite (361), eine zweite Grundseite (362) und zwei Schenkel (363) umfasst,
- sich die erste Grundseite (361) an den stromaufwärtigen Abschnitt (34) der Strömungsleitplatte (32) und die zweite Grundseite (362) an den stromabwärtigen Abschnitt (35) der Strömungsleitplatte (32) anschließt und
- die erste Grundseite (361) größer ist als die zweite Grundseite (362).

6. Vorrichtung (30) nach einem der Ansprüche 1 bis 3,
wobei
- das Verbindungsmittel (33) eine erste Seitenwand (331) und eine zweite Seitenwand (332) umfasst und
- die Strömungsleitplatte (32) und beide Seitenwände (331, 332) einen solchen geschlossenen Kanal bilden, dass die Luftströmung (42) beim Entlangströmen an dem geschlossenen Kanal beschleunigt wird.

7. Rotorblatt (20) nach einem der vorhergehenden Ansprüche,
wobei die Vorrichtung (30) an der Saugseite (26) des Rotorblatts (20) angebracht ist.

8. Rotorblatt (20) nach einem der vorhergehenden Ansprüche,
wobei der Befestigungsabschnitt (31) der Vorrichtung (30) in die Oberfläche (23) des Rotorblatts (20) integriert ist.

9. Rotorblatt (20) nach einem der vorhergehenden Ansprüche,
wobei der maximale Abstand zwischen der Strömungsleitplatte (32) und der Oberfläche (23) des Rotorblatts (20) geringer ist als die Dicke der Grenzschicht (43).

10. Rotorblatt (20) nach einem der vorhergehenden Ansprüche,
wobei der Abstand zwischen der Strömungsleitplatte (32) und der Oberfläche (23) des Rotorblatts (20) so gewählt ist, dass sich bei sich vergrößerndem Anströmwinkel der Anteil der Luftströmung (42), der innerhalb der Grenzschicht an der Position der Vorrichtung (30) strömt und von der Vorrichtung (30) beeinflusst wird, im Vergleich zur Gesamtluftströmung (42) innerhalb der Grenzschicht an der Position der Vorrichtung (30) verringert, was somit zu einer geringeren Belastung der Windturbine (10) führt.

## Revendications

1. Pale de rotor (20) d'une éolienne (10) comprenant un bord de fuite (24), un bord d'attaque (25), un côté d'aspiration (26), un côté de pression (27), et au moins un dispositif (30) permettant de diminuer la sensibilité à la rugosité de la pale de rotor (20), dans lequel
- le dispositif (30) comprend une section de fixation (31) grâce à laquelle il est agencé et préparé pour être fixé à une surface (23) de la pale de rotor (20),
- le dispositif (30) comprend une plaque de guidage de flux (32) et un moyen de liaison (33) qui est relié à la section de fixation (31) avec la plaque de guidage de flux (32),
- le dispositif (30) est approprié pour générer un vortex en aval du dispositif (30),
- la plaque de guidage de flux (32) comprend une section en amont (34) et une section en aval (35), moyennant quoi la section en amont (34) et la section en aval (35) sont définies par rapport au sens du flux d'air (42), - la distance entre la section en amont (34) et la surface (23) de la pale de rotor (20) est différente comparée à la distance entre la section en aval (35) et la surface (23) de la pale de rotor (23), et
- la distance entre la section en amont (34) et la surface (23) de la pale de rotor (20) est supérieure à la distance entre la section en aval (35) et la surface (23) de la pale de rotor (20)
**caractérisée en ce que**
un plan comprenant la section en amont (34) de la plaque de guidage de flux (32) et la section en aval (35) de la plaque de guidage de flux (32) comprend un angle (37) avec la surface (23) de la pale de rotor (20) qui se situe entre 10 et 15 degrés.

2. Dispositif (30) selon la revendication 2, dans lequel la plaque de guidage de flux (32) présente la forme d'une plaque plane, en particulier d'une plaque plane trapézoïdale.

3. Dispositif (30) selon la revendication 1, dans lequel la plaque de guidage de flux (32) est courbée de sorte que le flux d'air (42) est accéléré le long de son passage le long du dispositif (30) de manière à ce qu'une distribution prédéterminée de la vitesse du flux d'air (42) à travers la couche de limite soit obtenue au niveau de la section en aval (35) de la plaque de guidage de flux (32).

4. Dispositif (30) selon l'une des revendications précédentes, dans lequel la plaque de guidage de flux (32) comprend une première sous-plaque (321) et une seconde sous-plaque (322), les deux sous-plaques (321, 322) étant séparées par un intervalle (36).

5. Dispositif (30) selon la revendication 4, dans lequel
- l'intervalle (36) présente une forme essentiellement trapézoïdale dans une vue de dessus du dispositif (30),
- la forme trapézoïdale comprend une première base (361), une seconde base (362) et deux montants (363),
- la première base (361) est adjacente à la section en amont (34) de la plaque de guidage de flux (32) et la seconde base (362) est adjacente à la section en aval (35) de la plaque de guidage de flux (32), et
- la première base (361) est supérieure à la seconde base (362) .

6. Dispositif (30) selon l'une des revendications 1 à 3, dans lequel
- le moyen de connexion (33) comprend une première paroi latérale (331) et une seconde paroi latérale (332), et
- la plaque de guidage de flux (32) et les deux parois latérales (331, 332) constituent un canal fermé de sorte que le flux d'air (42) est accéléré le long de son passage le long du canal fermé.

7. Pale de rotor (20) selon l'une des revendications précédentes, dans lequel le dispositif (30) est fixé au côté d'aspiration (26) de la pale de rotor (20).

8. Pale de rotor (20) selon l'une des revendications précédentes, dans lequel la section de fixation (31) du dispositif (30) est intégrée dans la surface (23) de la pale de rotor (20).

9. Pale de rotor (20) selon l'une des revendications précédentes, dans lequel la distance maximum entre la plaque de guidage de flux (32) et la surface (23) de la pale de rotor (20) est inférieure à l'épaisseur de la couche de limite (43).

10. Pale de rotor (20) selon l'une des revendications précédentes, dans lequel la distance entre la plaque de guidage de flux (32) et la surface (23) de la pale de rotor (20) est choisie de manière à augmenter les angles d'attaque de la fraction du flux d'air (42) s'écoulant dans la couche de limite au niveau de la position du dispositif (30), et qui est influencée par le dispositif (30) diminue, comparé au flux d'air total (42) dans la couche de limite au niveau de la position du dispositif (30), menant ainsi à une charge décroissante de l'éolienne (10).
